# EUROPEAN PATENT APPLICATION

(11) **EP 4 456 444 A1**
(43) Date of publication of application: **30.10.2024**
(21) Application number: 23742687.9
(22) Date of filing: 04.01.2023
(51) Int. Cl.: H04B 7/185

(54) **COMMUNICATION BASE STATION, MIGRATION METHOD FOR COMMUNICATION BASE STATION, AND STORAGE MEDIUM**

(30) Priority: 21.01.2022 CN 202210073522
(71) Applicant: ZTE Corporation, Shenzhen, Guangdong 518057 (CN)
(72) Inventor: YANG, Jun, Shenzhen, Guangdong 518057 (CN); CHEN, Yijian, Shenzhen, Guangdong 518057 (CN); DOU, Jianwu, Shenzhen, Guangdong 518057 (CN)
(74) Representative: Aipex B.V.
(86) International application number: PCT/CN2023/070384
(87) International publication number: WO 2023/138371

(57) **Abstract**

Provided communication base station, migration method thereof, and storage medium. Communication base station includes communication module and connection module. Communication module includes flight module, first interface module, power supply module, and first alignment module. Connection module includes second alignment module, second interface module, and support module. Flight module provides flight propulsion and navigation for communication module to enable it migrated from first area to second area. First interface module docks with second interface module. Power supply module supplies power to each module in the communication module. The first alignment module is employed for docking between communication module and connection module. Second alignment module provides first alignment module with interface position information and alignment identifiers used by communication module to control flight module to adjust flight posture of communication module, to enable communication module connected to connection module. Support module provides fixed support for communication module.

## Description

### TECHNICAL FIELD

The present application relates to the field of communications, for example, a communication base station, a communication base station migration method, and a storage medium.

### BACKGROUND

In the construction of wireless networks, the costs of hardware devices make up the largest expenditure, and the costs of base stations make up the majority of the costs of hardware devices. As a network size increases from a first-generation mobile communication technology (1G) network to a 5G network, an investment in base stations increases. In the 5G era, a diversity of new scenarios imposes new network requirements, and a base station increases in complexity, resulting in an increase in cost. In another aspect, the new wireless communication technology is gradually developing from a low frequency to a high frequency, and a high frequency band has the problems of a limited propagation distance and a reduced coverage range. Therefore, denser base stations need to be deployed in the future so that better signal coverage can be implemented, further increasing network construction costs. Therefore, how to reduce hardware costs in the construction of wireless networks has become an urgent problem to be solved.

The working and life styles in modern cities make people move very regularly. For example, during working time on working days, people gather in working places such as industrial parks and office buildings in urban areas. After working time and on holidays, people gather in residential areas, business areas, and entertainment places. Due to such movement of people in dense urban areas, the network construction in each area requires the planning of the number of base stations according to a maximum number of access users. Each base station is a device fixedly installed and can neither move along with users nor be deployed dynamically according to traffic changes in the urban area. With this design scheme, devices in each area cannot be fully utilized within one time period while needing to cope with the pressure of a traffic surge within another time period. For operators, a failure to make full use of the invested devices is a loss. Regular traffic surges cause a certain network congestion risk.

### SUMMARY

Embodiments of the present application provide a communication base station. The communication base station includes a movable communication module and an unmovable connection module; the communication module includes a flight module, a first interface module, a power supply module, and a first alignment module; and the connection module includes a second alignment module, a second interface module, and a support module. The flight module is configured to provide flight propulsion and navigation for the communication module to enable the communication module to be autonomously migrated from a first area to a second area. The first interface module is configured to docking with the second interface module in the connection module. The power supply module is configured to supply power to each module in the communication module. The first alignment module is employed for docking the communication module with the connection module. The second alignment module is configured to provide interface position information and alignment identifiers for the first alignment module in the communication module to enable the communication module to control the flight module to adjust a flight posture of the communication module and to enable the communication module to be connected to the connection module according to the interface position information and the alignment identifiers. The support module is configured to provide fixed support for the communication module connected to the connection module.

Embodiments of the present application provide a communication base station migration method. The communication base station migration method is applied to the communication base station according to any preceding embodiment and includes the following.

When the communication module acquires a migration instruction, the communication module sends a first disconnection request to the connection module in a first area, where the first area is an area where the communication module is currently located, and the migration instruction includes at least a target migration position and a target connection module identifier. When a disconnection condition is satisfied, the connection module sends first disconnection acknowledgement information to the communication module. The flight module in the communication module migrates to a second area according to a flight route planned for the target migration position, where the second area is an area where the target migration position is located. When reaching the target migration position, the communication module acquires the alignment identifiers of the connection module corresponding to the target connection module identifier. The communication module adjusts the flight posture of the communication module according to the alignment identifiers to dock with a second interface module of the connection module.

Embodiments of the present application provide a storage medium in which a computer program is stored, where the computer program, when executed by a processor, causes the processor to perform the communication base station migration method according to any preceding embodiment.

### BRIEF DESCRIPTION OF DRAWINGS

FIG. 1 is a block diagram of a communication base station according to an embodiment of the present application.
FIG. 2 is a flowchart of a communication base station migration method according to an embodiment of the present application.
FIG. 3 is another block diagram of a communication base station according to an embodiment of the present application.
FIG. 4 is a block diagram of a migration apparatus for a communication base station according to an embodiment of the present application.

### DETAILED DESCRIPTION

Embodiments of the present application are described hereinafter in conjunction with drawings. The present application is described below in conjunction with embodiments and the drawings, and the examples illustrated are intended to explain the present application.

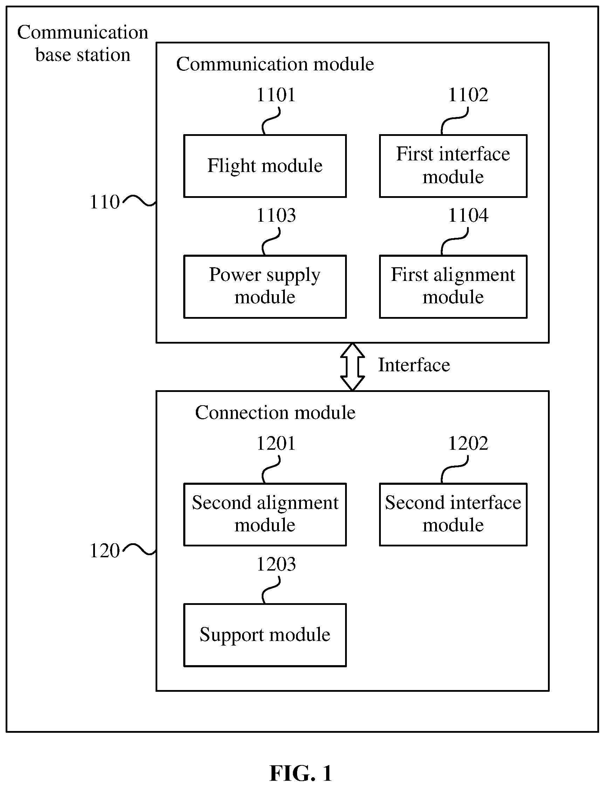

In an embodiment, FIG. 1 is a block diagram of a communication base station according to an embodiment of the present application. As shown in FIG. 1, the communication base station in this embodiment includes a movable communication module 110 and an unmovable connection module 120. The communication module 110 includes a flight module 1101, a first interface module 1102, a power supply module 1103, and a first alignment module 1104. The connection module 120 includes a second alignment module 1201, a second interface module 1202, and a support module 1203. The flight module 1101 is configured to provide flight propulsion and navigation for the communication module 110 to enable the communication module 110 to autonomously migrate from a first area to a second area. The first interface module 1102 is configured to dock with the second interface module 1202 in the connection module 120. The power supply module 1103 is configured to supply power to each module in the communication module 110. The first alignment module 1104 is employed for actively docking the communication module 110 with the connection module 120. The second alignment module 1201 is configured to provide interface position information and alignment identifiers for the first alignment module 1104 of the communication module 110 to enable the communication module 110 to control the flight module 1101 to adjust a flight posture of the communication module 110 and to enable the communication module 110 to be connected to the connection module 120 according to the interface position information and the alignment identifiers. The support module 1203 is configured to provide fixed support for the communication module 110 connected to the connection module 120.

In the embodiments, the flight module 1101 includes a flight assembly and a navigation assembly and may provide the flight propulsion and the navigation for the entire communication module 110 so that the communication module 110 can autonomously migrate from the first area to the second area. In the embodiments, the unmovable connection module 120 may be installed on infrastructure such as a building or a base station tower to form a base of the communication base station and provide the fixed support and a connection for the communication module 110. In the embodiments, the connection module 120 may be connected to or disconnected from the communication module 110. The communication module 110 in the first area may break a connection with a connection module 120 in the first area, autonomously fly to the second area, and establish a connection with a connection module 120 corresponding to alignment identifiers in the second area. After the movable communication module 110 in the first area is connected to the connection module 120 in the second area, the communication module 110 may provide a wireless network service for a terminal device in the second area. Through real-time traffic monitoring and accurate traffic trend prediction, the communication module 110 in this embodiment may reasonably plan the migration of the communication base station so that more communication base stations gather in an area with more concentrated users and greater traffic, and the communication base station deployed by operator(s) can be better utilized, thereby implementing better network coverage without adding hardware devices.

In an embodiment, each of the communication module and the connection module further includes a processing module. Processing modules in the communication module and the connection module have the same function and are both configured to process to-be-sent data and received data. In the embodiments, the processing module has a conventional signal processing function and may process the to-be-sent data and the received data. The processing includes, but is not limited to, baseband functions such as encoding, decoding, modulation, and demodulation. The processing module further has a conventional network function such as wireless resource allocation and scheduling.

In an embodiment, the communication module further includes an antenna module, and the antenna module is configured to send or receive a wireless signal and provide a wireless communication service for a terminal device. In the embodiments, the antenna module may include an antenna or an antenna array and may send or receive the wireless signal. After the terminal device gets access to the communication base station, the built-in antenna module in the communication module in the communication base station provides the wireless communication service for the terminal device.

In an embodiment, the connection module further includes an antenna module, and the antenna module is configured to send or receive a wireless signal. In the embodiments, the connection module may also include the antenna module so that the connection module can establish a wireless connection with the communication module and perform data transmission through a wireless channel.

In an embodiment, the communication module further includes a storage module, and the storage module is configured to store migration plan data of the communication module, a migration route of the communication module, and parameters of the connection module in each area. A migration plan refers to regular migration planned for the communication module. For example, a migration instruction may be generated regularly according to the migration plan to perform a corresponding migration operation.

In an embodiment, the first interface module includes a power supply interface, a communication interface, and a mechanical fixation interface. In the first interface module, the power supply interface is configured to supply power from the connection module connected to the power supply interface to each module in the communication module or supply power to the power supply module to charge the power supply module; the communication interface is configured to exchange information with the connection module; and the mechanical fixation interface is configured to mechanically dock with and lock the connection module.

In an embodiment, the second interface module includes a power supply interface, a communication interface, a mechanical fixation interface, and a backhaul interface. In the second interface module, the power supply interface is configured to supply power to the communication module connected to the power supply interface; the communication interface is configured to exchange information with the communication module; the mechanical fixation interface is configured to mechanically dock with and lock the communication module; and the backhaul interface is configured to be connected to a radio access network to receive the to-be-sent data and backhaul the received data. In the embodiments, the communication interface may exchange information through a fiber interface, a coaxial interface, or another medium of interface that can complete signal transmission; and the backhaul interface may be connected to the radio access network in a wired or wireless manner.

In an embodiment, the support module is further configured to adjust posture of the communication module. In the embodiments, the support module provides fixed support for the communication module in one aspect and adjusts the posture of the communication module in the other aspect. In the embodiments, adjusting the posture of the communication module refers to adjusting a pitch angle of the communication module and an azimuth of the communication module so that the second interface module in the connection module docks with the first interface module in the communication module. In the embodiments, the support module may include a hydraulic apparatus, and the hydraulic apparatus drives a support structure to extend and retract to adjust the posture of the communication module. The support module may include an electric motor, and the motor rotates to drive the support structure to extend, retract, and rotate to adjust the posture of the communication module. The support module adjusts the posture of the communication module so that a coverage area of the wireless signal of the communication base station can be corrected and the signal quality of a to-be-covered area is optimized.

In an embodiment, the flight module includes one of a rotor flight structure or a jet flight structure. In the embodiments, in a migration process, the flight module provides propulsion to the communication base station, and the flight module may provide flight propulsion in the two manners below. In a first manner, the flight module provides flight propulsion by using the rotor flight structure and the built-in power supply module in the communication module supplies power for flight; and after the migration and docking with a new connection module, the built-in power supply of the communication module is charged by the connection module, to prepare for the next migration. In a second manner, the flight module provides flight propulsion by using the jet flight structure, and fuel required for flight is provided by an external fuel storage apparatus.

In an embodiment, the mechanical fixation interface in the first interface module is configured to monitor whether the mechanical fixation interface is locked by the connection module, and in the case where the mechanical fixation interface is in a locked state, the communication module cannot start the flight module to perform migration. In the embodiments, the mechanical fixation interface in the first interface module is mechanically docked with the connection module, and upon completion of the mechanical docking, the connection module locks the mechanical fixation interface in the first interface module so that the communication module cannot start the flight module to perform migration. In the case where the mechanical fixation interface in the first interface module is not locked by the connection module, upon receiving the migration instruction, the communication module may start the flight module to perform migration.

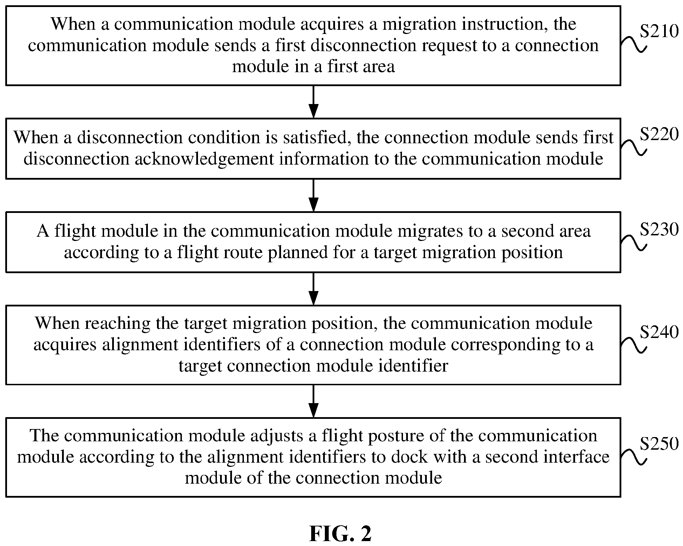

In an embodiment, FIG. 2 is a flowchart of a communication base station migration method according to an embodiment of the present application. This embodiment may be executed by the communication base station in the preceding embodiment. As shown in FIG. 2, The communication base station migration method according to this embodiment includes S210 to S250.

In S210, in response to that a communication module acquires a migration instruction, the communication module sends a first disconnection request to a connection module in a first area.

The first area is an area where the communication module is currently located. The migration instruction includes at least a target migration position and a target connection module identifier. In the embodiments, the migration instruction may be received in a wired or wireless manner. In the case where the migration instruction is acquired wirelessly, the migration instruction may be acquired from a wireless signal received by a built-in antenna module in the communication module, and migration may be performed. In the case where the migration instruction is acquired in the wired manner, the migration instruction may be received through a communication interface connected to the connection module, and the migration may be performed. Of course, the corresponding migration instruction may be generated from migration plan data stored in a built-in storage module in the communication module, and the migration may be performed. In the embodiments, the target migration position refers to a destination to which the communication module is to migrate. The target connection module identifier refers to an identifier of a connection module that is to establish a connection with the communication module and is identification information of the connection module. It is to be understood that the target migration position provides the communication module with an area in the proximity of the connection module with which the connection is to be established.

In the embodiments, the first disconnection request refers to a request for breaking a wired connection between the connection module in the first area and the communication module. It is to be understood that the wired connection between the communication module and the connection module needs to be broken. In the embodiments, after the communication module acquires the migration instruction and confirms no terminal access, no to-be-sent data, and no to-be-received data, the communication module sends, through the communication interface, the first disconnection request to the connection module connected to the communication module.

In S220, in response to that a disconnection condition is satisfied, the connection module sends first disconnection acknowledgement information to the communication module.

In an embodiment, the disconnection condition includes that the number of access terminals is zero and that to-be-received data and to-be-sent data are zero. In the embodiments, that the number of access terminals is zero may be understood as that the number of terminals with access to the communication module is zero; and that the to-be-sent data and the to-be-received data are zero refers to that the sending of the to-be-sent data and the receiving and forwarding of the to-be-received data have been completed.

In S230, a flight module in the communication module migrates to a second area according to a flight route planned for the target migration position.

The second area is an area where the target migration position is located. In the embodiments, the flight module in the communication module plans the flight route according to the target migration position so that the communication module autonomously migrates to the target migration position in the second area according to the flight route.

In S240, when reaching the target migration position, the communication module acquires alignment identifiers of the connection module corresponding to the target connection module identifier is acquired.

In the embodiments, the target migration position provides the communication module with a general orientation of the connection module in the second area. To better align and dock with the connection module in the second area, a second alignment module in the connection module provides the alignment identifiers for the communication module.

In S250, the communication module adjusts a flight posture of the communication module according to the alignment identifiers to dock with a second interface module of the connection module.

In the embodiments, the communication module adjusts the flight posture of the communication module, that is, adjusts a pitch angle of the communication module according to the alignment identifiers so that the communication module can accurately dock with the second interface module of the connection module.

In an embodiment, before the communication module sends the first disconnection request to the connection module in the first area, The communication base station migration method further includes that the communication module performs clear operation on access users and data. The clear operation on the access users and the data includes completing the sending of the to-be-sent data and the receiving and forwarding of the to-be-received data, sending a cell handover instruction to access terminals, and broadcasting a service termination notification to a cell and stopping new access from terminals. In the embodiments, after receiving the migration instruction, the communication module clears the data of the access users, that is, completes the sending of the to-be-sent data and the receiving and forwarding of the to-be-received data, sends the cell handover instruction to the access terminal, and broadcasts the service termination notification to the cell and stops the new access from terminals.

In an embodiment, the communication base station migration method further includes the following.

The connection module breaks a connection with a first interface module in the communication module and releases mechanical support and locking. A power supply mode of the communication module is switched from a power supply by the connection module connected to the communication module to a power supply by a power supply module inside the communication module. In the embodiments, after the connection module receives the first disconnection request, the connection module breaks the connection with the first interface module in the communication module and releases the communication module from mechanical support and locking; moreover, the power supply module inside the communication module is started to supply power to each module in the communication module. Of course, after confirming no terminal access, no to-be-sent data, and no to-be-received data, the communication module may directly switch the power supply mode of the communication module to the power supply by the power supply module inside and start the flight module.

In an embodiment, the connection module includes an antenna module, and the communication base station migration method further includes the following.

The communication module sends a second disconnection request to the connection module in the first area. The connection module sends second disconnection acknowledgement information to the communication module through the antenna module.

In the embodiments, in the case where the connection module includes the antenna module, a wireless connection between the communication module and the connection module also needs to be broken. In the embodiments, after the communication module receives the first disconnection acknowledgement information from the connection module, the communication module sends, through the communication interface, the second disconnection request to the connection module connected to the communication module and starts the antenna module to monitor a response from the connection module. After receiving the second disconnection request, the connection module breaks the wired connection with the communication module, releases the communication module from mechanical locking, and sends the second disconnection acknowledgement information to the communication module through the antenna module. After receiving the second disconnection acknowledgement information, the communication module starts to perform flight and migration.

In an embodiment, the communication base station migration method further includes the following.

In a flight process of the communication module, the antenna module receives positioning information from another base station or a satellite. A positioning and navigation assembly in the flight module performs positioning and navigation on the communication module in real time until the communication module migrates to the target migration position. In the embodiments, to ensure that an actual flight route of the communication module in the flight process is consistent with the pre-planned flight route, the positioning and navigation assembly in the flight module performs the positioning and the navigation on the communication module in real time until the communication module migrates to the target migration position.

In an embodiment, the communication base station migration method further includes the following.

A position and a posture of the connection module are adjusted and a mechanical fixation interface of the connection module is docked by using the flight module in the communication module, and a first docking request is sent to the connection module. After receiving the first docking request, the connection module connects a power supply interface and a communication interface and sends first docking acknowledgement information to the communication module. In the embodiments, in the case where the communication module confirms, according to the positioning information, that the target migration position is reached, the alignment identifiers of the specified connection module in the second area is acquired so that the flight module in the communication module adjusts the position of the communication module and the posture of the communication module according to the alignment identifiers, to enable the communication module to dock with the mechanical fixation interface of the connection module. In the case where the connection module includes the antenna module, when reaching the target migration position, the communication module establishes a wireless connection with the specified connection module in the second area through the antenna module. The connection module and the communication module mutually verify respective identification information in a process of establishing the wireless connection to confirm that the identification information is consistent with the migration instruction. In the case where the connection module does not include the antenna module, when reaching the target migration position, the communication module directly identifies the alignment identifiers of the specified connection module through a navigation assembly in the flight module. In the embodiments, the first docking request sent by the communication module to the connection module is a request for establishing a wired connection. After receiving the first docking request, the connection module connects the power supply interface and the communication interface and sends the first docking acknowledgement information to the communication module to confirm the wired connection between the communication module and the connection module.

In an embodiment, the connection module includes the antenna module; and before the mechanical fixation interface of the connection module is docked by using the flight module in the communication module, The communication base station migration method further includes the following.

The communication module sends a second docking request to the connection module through a wireless channel. When the communication module is aligned with the connection module, the connection module sends second docking acknowledgement information to the communication module. In the embodiments, in the case where the connection module includes the antenna module, the wireless connection between the communication module and the specified connection module in the second area also needs to be established. That is, the communication module sends the second docking request to the connection module through the wireless channel. After receiving the second docking request, the connection module checks an alignment state and sends the second docking acknowledgement information to the communication module through the wireless channel in response to confirming that the communication module is aligned with the connection module.

In an embodiment, after the communication module establishes the connection with the connection module in the second area, The communication base station migration method further includes the following.

The power supply mode of the communication module is switched from the power supply by the power supply module inside the communication module to the power supply by the connection module connected to the communication module. In the embodiments, after the wired connection is established between the communication module and the connection module, the connection module supplies power to the communication module in a wired manner through a power supply interface in the communication module. When supplying power to the communication module in the wired manner through the power supply interface in the communication module, the connection module may also charge the power supply module in the communication module to ensure that the power supply module is in a fully charged state as much as possible.

In an embodiment, the migration instruction is acquired in one of the following manners: the migration instruction is acquired regularly from the migration plan data stored in the storage module; or the migration instruction is delivered by a base station management system or a network management system. In the embodiments, the communication module may regularly generate the corresponding migration instruction from the migration plan data stored in the storage module. Alternatively, the base station management system or the network management system may generate the corresponding migration instruction through real-time traffic monitoring and traffic trend prediction and deliver the migration instruction to the communication base station.

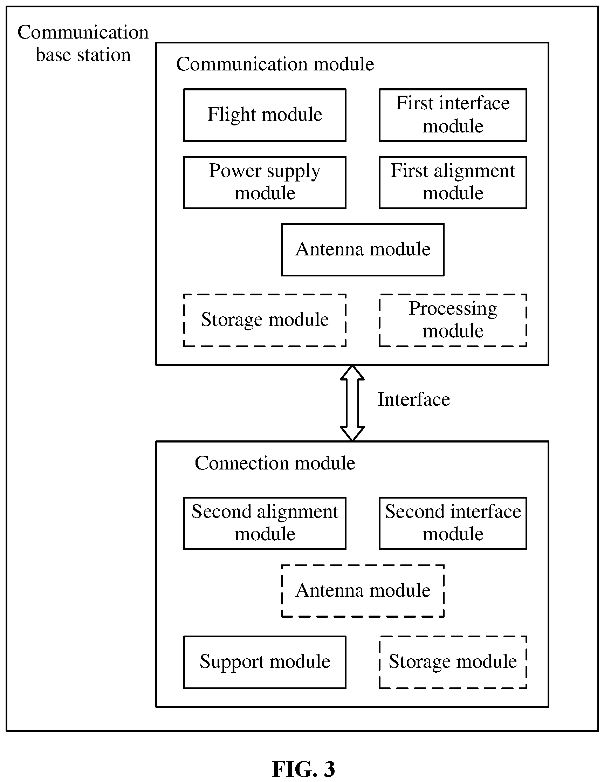

In an embodiment, FIG. 3 is another block diagram of a communication base station according to an embodiment of the present application. As shown in FIG. 3, the present application provides a communication base station for sending, receiving, and processing a wireless signal. The base station includes a movable communication module and an unmovable connection module. The connection module may be connected to or disconnected from the communication module. The communication module in a first area may be disconnected from a connection module in the first area, fly to a second area, and be connected to a specified connection module in the second area. After being connected to the unmovable connection module, the movable communication module may provide a wireless network service for a terminal device. The base station has the characteristics below.

A wireless communication base station provided in the present application is composed of the movable communication module and the unmovable connection module.

### (1) Communication module

The movable communication module includes five main modules: an antenna module, a flight module, a first interface module, a power supply module, and a first alignment module. The antenna module includes an antenna or an antenna array and may send or receive a wireless signal and provide a wireless communication service for the terminal device. The flight module includes a flight assembly and a navigation assembly and may provide flight propulsion and navigation for the entire communication module so that the communication module can autonomously migrate from the first area to the second area. The first interface module mainly includes a power supply interface, a communication interface, and a mechanical fixation interface and is configured to dock with the unmovable connection module. The power supply module may be configured to supply power to each module. The first alignment module may be applied to the communication module interfacing with the connection module.

In an embodiment, the communication module may further include a processing module, and the processing module has a conventional signal processing function and may process a to-be-sent signal and a received signal. The processing includes, but is not limited to, baseband functions such as encoding, decoding, modulation, and demodulation. The processing module further has a conventional network function such as wireless resource allocation and scheduling.

In an embodiment, the communication module may further include a storage module, and the storage module may store migration plan data, migration route data, information about a connection module in each area, and the like.

### (2) Connection module

The unmovable connection module may be installed on infrastructure such as a building or a base station tower to form a base of the wireless communication base station provided in the present application and provide fixed support and a connection for the communication module. The connection module mainly includes a second interface module, a second alignment module, and a support module.

The second interface module includes at least a power supply interface, a communication interface, a mechanical fixation interface, and a backhaul interface. The power supply interface provides a power supply for the communication module connected to the power supply interface. The communication interface is configured to exchange information with the communication module and may exchange information through a fiber interface, a coaxial interface, or another medium of interface that can complete signal transmission. The mechanical fixation interface is configured to provide the fixed support and locking for the communication module connected to the mechanical fixation interface. The backhaul interface is configured to be connected to a radio access network to receive to-be-sent data and backhaul received data. The backhaul interface may be connected to the radio access network in a wired or wireless manner.

The second alignment module provides interface position information and alignment identifiers for the first alignment module of the flying communication module so that the communication module adjusts a posture through the flight module and is connected to the connection module according to the interface position information and the alignment identifiers provided by the second alignment module. The support module may provide the fixed support for the communication module connected to the connection module.

In an embodiment, the connection module may include an antenna module. The antenna module includes an antenna or an antenna array and may send or receive a wireless signal. The antenna module may be configured to exchange information before the communication module is connected to the connection module and after the communication module is disconnected from the connection module. The exchanged information includes an identification, a connection request, and an acknowledgement. The antenna module may also be configured to implement access functions of some terminal devices.

In an embodiment, the connection module may further include a processing module, and the processing module has a conventional signal processing function and may process a to-be-sent signal and a received signal. The processing includes, but is not limited to, baseband functions such as encoding, decoding, modulation, and demodulation. The processing module further has a conventional network function such as wireless resource allocation and scheduling.

In an embodiment, the migration of the communication module refers to that the communication module of the wireless communication base station provided in the present application is disconnected from the connection module in the first area, autonomously flies to the second area, and is connected to the specified connection module in the second area.

A migration process of the communication module is divided into three processes: breaking a current connection, flight and migration, and establishing a new connection.

The first process of breaking the current connection is implemented in two cases.

Case one: In the case where the connection module includes the antenna module, the first process may be implemented as follows.

1.1 After receiving a migration instruction, the communication module clears a user and data. Clearing the user and the data includes completing the sending of to-be-sent data and the receiving and forwarding of to-be-received data, sending a cell handover instruction to access terminals, and broadcasting a service termination notification to a cell and stopping new access from terminals. 1.2 After confirming no terminal access, no to-be-sent data, and no to-be-received data, the communication module sends, through the communication interface, a first disconnection request to the connection module connected to the communication module. 1.3 After receiving the first disconnection request, the connection module checks a connection state and sends first disconnection acknowledgement information to the communication module in response to confirming that a disconnection condition is satisfied. The disconnection condition may include that the number of access terminals is 0 and that to-be-received data and to-be-sent data are zero. 1.4 After receiving the first disconnection acknowledgement information from the connection module, the communication module enables an internal power supply and starts the flight module. 1.5 The communication module sends, through the communication interface, a second disconnection request to the connection module connected to the communication module and starts the antenna module to monitor a response from the connection module. 1.6 After receiving the second disconnection request, the connection module breaks a connection with the first interface module in the communication module, releases the communication module from mechanical locking, and sends second disconnection acknowledgement information to the communication module through the antenna module. 1.7 The connection module enters a sleep state until the connection module receives a new activation instruction and re-enters a normal working state, where the sleep state refers to that the connection module no longer provides an external service to reduce energy consumption. 1.8 After receiving the second disconnection acknowledgement information, the communication module starts the flight and migration.

Case two: In the case where the connection module does not include the antenna module, the first process may be implemented as follows.

2.1 After receiving a migration instruction, the communication module clears a user and data. Clearing the user and the data includes completing the sending of to-be-sent data and the receiving and forwarding of to-be-received data, sending a cell handover instruction to access terminals, and broadcasting a service termination notification to a cell and stopping new access from terminals. 2.2 After confirming no terminal access, no to-be-sent data, and no to-be-received data, the communication module switches a power supply mode to an internal power supply and starts the flight module. 2.3 The communication module sends, through the communication interface, a first disconnection request to the connection module connected to the communication module and starts to monitor locked states of the power supply interface, the communication interface, and the mechanical fixation interface. 2.4 After receiving the first disconnection request, the connection module checks a connection state, sends first disconnection acknowledgement information to the communication module in response to confirming that a disconnection condition is satisfied, and breaks power and communication connections with the communication module and releases the communication module from mechanical locking. The disconnection condition may include that the number of access terminals is 0 and that to-be-received data and to-be-sent data are zero. 2.5 The connection module enters a sleep state until the connection module receives a new activation instruction and re-enters a normal working state, where the sleep state refers to that the connection module no longer provides an external service to reduce energy consumption. 2.6 After receiving the first disconnection acknowledgement information from the connection module, the communication module starts the flight and migration after monitoring that the power supply interface, the communication interface, and the mechanical fixation interface are all unlocked.

The second process of flight and migration may be implemented as follows.

3.1 The communication module determines a target migration position and a target connection module identifier according to the migration instruction. 3.2 The flight module in the communication module plans a flight route according to the target migration position and migrates according to the flight route. 3.3 In a flight process of the communication module, the antenna module receives positioning information from another base station or a satellite, and a positioning and navigation assembly performs positioning and navigation in real time until the communication module migrates to a specified area.

The third process of the communication module establishing the new connection is implemented in two cases.

Case one: In the case where the connection module includes the antenna module, the third process may be implemented as follows.

4.1 The communication module confirms, according to the positioning information, that the specified area is reached and establishes a wireless connection with the specified connection module in the area through the antenna module. In a connection establishment process, the communication module and the connection module need to mutually verify respective identification information to confirm that the identification information is consistent with the migration instruction. 4.2 After establishing the wireless connection with the connection module, the communication module receives alignment information from the connection module and adjusts a position and a posture according to the alignment identifiers from the connection module to prepare for interfacing. 4.3 The communication module sends a first docking request to the connection module through a wireless channel. 4.4 After receiving the first docking request, the connection module checks an alignment state and sends first docking acknowledgement information to the communication module through the wireless channel in response to confirming that the communication module is aligned with the connection module. 4.5 After receiving the first docking acknowledgement information, the communication module docks with the mechanical fixation interface of the connection module through the flight module and sends a second docking request to the connection module through the wireless channel. 4.6 After receiving the second docking request, the connection module completes the locking and support of the mechanical fixation interface, connects the power supply interface and the communication interface, enables a service function of the connection module, and sends second docking acknowledgement information to the communication module through the wireless channel. 4.7 After receiving the second docking acknowledgement information, the communication module stops the flight module, switches the power supply mode to a power supply by the connection module, and enables a wireless communication function of the communication module to provide a wireless access service for a terminal in a service area.

Case two: In the case where the connection module does not include the antenna module, the third process may be implemented as follows.

5.1 The communication module confirms, according to the positioning information, that the specified area is reached and identifies alignment identifiers of the specified connection module through the navigation assembly of the flight module. 5.2 The communication module adjusts a position and a posture with the alignment identifiers as a target and actively docks with interfaces of the connection module after confirming that the interfaces of the connection module are aligned. 5.3 After the communication module docks with the interfaces, the interface module of the connection module generates an activation instruction so that the connection module switches from the sleep state to a docked state. 5.4 The connection module completes the locking and support of the mechanical fixation interface, connects the power supply interface and the communication interface, enables a service function of the connection module, and sends docking acknowledgement information to the communication module through the communication interface. 5.5 After receiving the docking acknowledgement information, the communication module stops the flight module, switches the power supply mode to a power supply by the connection module, and enables a wireless communication function of the communication module to provide a wireless access service for a terminal in a service area.

In embodiments of the present application, the movable communication module and the unmovable connection module are configured in the communication base station, and the migration instruction is sent to the communication module according to area traffic or regularly to control the movement of the communication module so that traffic changes in an urban area can be handled quickly and flexibly, wireless access quality and user experience in a high pedestrian traffic area are improved, the energy consumption of devices in an idle network area is reduced, the resource utilization rate of a base station is improved, and the hardware costs of operators are reduced.

In an embodiment, a manner in which the communication module acquires the migration instruction is described. In the embodiments, the communication module may acquire the migration instruction in the three manners below.

(1) The migration plan data stored in the storage module is read, and the migration instruction is generated regularly according to a migration plan to perform migration. (2) The migration instruction is acquired from a wireless signal received by the antenna module to perform migration. (3) The migration instruction is received from the communication interface connected to the connection module to perform migration.

In the case where the communication base station is faulty, that is, the communication base station needs to be repaired, the communication base station may autonomously migrate to a maintenance station so that the faulty communication base station is repaired. A position of a maintenance point may be provided by a base station management system or a network management system. The faulty base station autonomously migrates to a specified maintenance point according to received information about the maintenance point. The communication base station provided in the present application has a capability of autonomously returning to a factory for maintenance so that the maintenance efficiency of network devices can be improved, and the hardware maintenance costs and operation costs of operators can be further reduced.

In an embodiment, a processing process of a signal sent and received by the communication base station is described. In the embodiments, a wireless signal needs to be sent by a radio frequency antenna after processing such as encoding and modulation, and a signal received by the radio frequency antenna needs to be demodulated and decoded so that original information is recovered. The sending and receiving processes also involve complex network resource allocation and scheduling problems. These data and resources need to be processed by the processing module. The wireless communication base station provided in the present application may choose to embed the processing module into the communication module to perform the preceding processing, may embed the processing module into the connection module to perform the preceding processing, or may embed the processing module into both the communication module and the connection module to process uplink and downlink data simultaneously in the two modules by means of reasonable division.

In an embodiment, a power drive manner of the flight module is described. In the embodiments, the flight module provides flight propulsion to the wireless communication base station provided in the present application in the migration process, and the flight module may provide flight propulsion in the two manners below.

(1) the flight module may provide flight propulsion using the rotor flight structure and the built-in power supply of the communication module supplies power for the flight. After the migration and docking with the new connection module, the built-in power supply of the communication module is charged by power supply of the connection module to prepare for the next migration. (2) the flight module may provide flight propulsion using the jet flight structure, and fuel required for flight is provided by an external fuel storage apparatus.

In an embodiment, that the connection module adjusts the posture of the communication module is described. In the embodiments, after the communication module docks with the connection module, the connection module may actively adjust the posture of the communication module so that the antenna module in the communication module rotates to an expected direction, to adjust a coverage range or improve transmission performance. The adjustment may be completed by the support module docked with the communication module. The support module may include a hydraulic apparatus, and the hydraulic apparatus drives a support structure to extend and retract to adjust the posture (a pitch angle) of the communication module. The support module may include an electric motor, and the motor rotates to drive the support structure to extend, retract, and rotate to adjust the posture of the communication module.

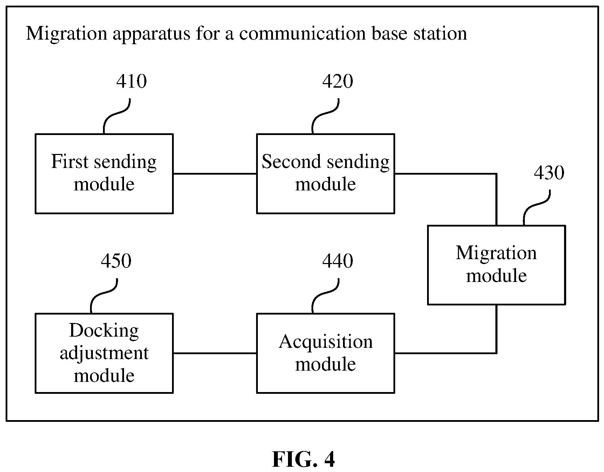

In an embodiment, FIG. 4 is a block diagram of a migration apparatus for a communication base station according to an embodiment of the present application. This embodiment is applied to the communication base station. As shown in FIG. 4, the migration apparatus in this embodiment includes a first sending module 410, a second sending module 420, a migration module 430, an acquisition module 440, and a docking adjustment module 450.

The first sending module 410 is configured to, when a communication module acquires a migration instruction, cause the communication module to send a first disconnection request to a connection module in a first area, where the first area is an area where the communication module is currently located, and the migration instruction includes at least a target migration position and a target connection module identifier. The second sending module 420 is configured to, when a disconnection condition is satisfied, cause the connection module to send first disconnection acknowledgement information to the communication module. The migration module 430 is configured to cause a flight module in the communication module to migrate to a second area according to a flight route planned for the target migration position, where the second area is an area where the target migration position is located. The acquisition module 440 is configured to, when the communication module reaches the target migration position, acquire alignment identifiers of a connection module corresponding to the target connection module identifier. The docking adjustment module 450 is configured to cause the communication module to adjust a flight posture of the communication module according to the alignment identifiers to dock with a second interface module of the connection module corresponding to the target connection module identifier.

In an embodiment, before the communication module sends the disconnection request to the connection module in the first area, the migration apparatus for a communication base station further includes a clear module.

The clear module is configured to cause the communication module to perform clear operation on access users and data. The clear operation on the access users and the data includes: completing the sending of to-be-sent data and completing the receiving and forwarding of to-be-received data, sending a cell handover instruction to access terminals, broadcasting a service termination notification to a cell, and stopping new access from terminals.

In an embodiment, the migration apparatus for a communication base station further includes a disconnection and release module and a first switching module.

The disconnection and release module is configured to cause the connection module to break a connection with a first interface module in the communication module and release mechanical support and locking. The first switching module is configured to switch a power supply mode of the communication module from a power supply by the connection module connected to the communication module to a power supply by a power supply module inside the communication module.

In an embodiment, the connection module includes an antenna module, and the migration apparatus for a communication base station further includes a third sending module and a fourth sending module.

The third sending module is configured to cause the communication module to send a second disconnection request to the connection module in the first area. The fourth sending module is configured to cause the connection module to send second disconnection acknowledgement information to the communication module through the antenna module.

In an embodiment, the disconnection condition includes that the number of access terminals is zero; or, that to-be-received data or to-be-sent data is zero.

In an embodiment, the migration apparatus for a communication base station further includes a receiving module and a positioning module.

The receiving module is configured to, in a flight process of the communication module, cause the antenna module to receive positioning information from another communication base station or a satellite. The positioning module is configured to cause a positioning and navigation assembly in the flight module to perform positioning and navigation on the communication module in real time until the communication module migrates to the target migration position.

In an embodiment, the migration apparatus for a communication base station further includes a docking module and a fifth sending module.

The docking module is configured to adjust a position and a flight posture by using the flight module in the communication module, dock with a mechanical fixation interface of the connection module, and send a first docking request to the connection module. The fifth sending module is configured to, after the connection module receives the first docking request, dock a power supply interface with a communication interface and send first docking acknowledgement information to the communication module.

In an embodiment, the connection module includes the antenna module; and before the mechanical fixation interface of the connection module is docked by using the flight module in the communication module, the migration apparatus for a communication base station further includes a sixth sending module and a seventh sending module.

The sixth sending module is configured to cause the communication module to send a second docking request to the connection module through a wireless channel. The seventh sending module is configured to, when the communication module is aligned with the connection module, cause the connection module to send second docking acknowledgement information to the communication module.

In an embodiment, after the communication module establishes a connection with the connection module in the second area, the migration apparatus for a communication base station further includes a second switching module.

The second switching module is configured to switch the power supply mode of the communication module from the power supply by the power supply module inside the communication module to the power supply by the connection module connected to the communication module.

In an embodiment, the migration instruction is acquired in one of the following manners: the migration instruction is acquired regularly from migration plan data stored in a storage module; or the migration instruction is delivered by a base station management system or a network management system.

The migration apparatus for a communication base station according to this embodiment is configured to perform the communication base station migration method according to the embodiment shown in FIG. 2 and has similar implementation principles and technical effects, which are not repeated here.

In an embodiment, embodiments of the present application further provide a storage medium including computer-executable instructions which, when executed by a computer processor, cause the processor to perform a communication base station migration method. The communication base station migration method includes the following: when a communication module acquires a migration instruction, the communication module sends a first disconnection request to a connection module in a first area, where the first area is an area where the communication module is currently located, and the migration instruction includes at least a target migration position and a target connection module identifier; when a disconnection condition is satisfied, the connection module sends first disconnection acknowledgement information to the communication module; a flight module in the communication module migrates to a second area according to a flight route planned for the target migration position, where the second area is an area where the target migration position is located; when reaching the target migration position, the communication module acquires alignment identifiers of a connection module corresponding to the target connection module identifier; and the communication module adjusts a flight posture of the communication module according to the alignment identifiers to dock with a second interface module of the connection module.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A communication base station, comprising:
a communication module and a connection module, wherein the communication module is movable and comprises a flight module, a first interface module, a power supply module, and a first alignment module; and the connection module is unmovable and comprises a second alignment module, a second interface module, and a support module;
wherein the flight module is configured to provide flight propulsion and navigation for the communication module to enable the communication module to autonomously migrate from a first area to a second area; the first interface module is configured to dock with the second interface module in the connection module; and the power supply module is configured to supply power to each of the second alignment module, the second interface module, and the support module in the communication module; and
wherein the first alignment module is employed for docking the communication module with the connection module; the second alignment module is configured to provide interface position information and alignment identifiers for the first alignment module in the communication module to enable the communication module to control the flight module to adjust a flight posture of the communication module and to enable the communication module to be connected to the connection module according to the interface position information and the alignment identifiers; and the support module is configured to provide fixed support for the communication module connected to the connection module.

2. The communication base station according to claim 1, wherein each of the communication module and the connection module further comprises a processing module; and
the processing module is configured to process to-be-sent data and received data.

3. The communication base station according to claim 1, wherein the communication module further comprises an antenna module, and the antenna module is configured to send or receive a wireless signal and provide a wireless communication service for a terminal device.

4. The communication base station according to claim 3, wherein the connection module further comprises an antenna module, and the antenna module is configured to send or receive a wireless signal.

5. The communication base station according to claim 1, wherein the communication module further comprises a storage module, and the storage module is configured to store migration plan data of the communication module, a migration route of the communication module, and parameters of the connection module in each area.

6. The communication base station according to any one of claims 1 to 5, wherein the first interface module comprises a power supply interface, a communication interface, and a mechanical fixation interface; and
the power supply interface in the first interface module is configured to supply power from the connection module connected to the power supply interface to each of the second alignment module, the second interface module, and the support module in the communication module, or, supply power to the power supply module to charge the power supply module; the communication interface in the first interface module is configured to exchange information with the connection module; and the mechanical fixation interface in the first interface module is configured to mechanically dock with and lock the connection module.

7. The communication base station according to any one of claims 1 to 5, wherein the second interface module comprises a power supply interface, a communication interface, a mechanical fixation interface, and a backhaul interface; and
the power supply interface in the second interface module is configured to supply power to the communication module connected to the power supply interface; the communication interface in the second interface module is configured to exchange information with the communication module; the mechanical fixation interface in the second interface module is configured to mechanically dock with and lock the communication module; and the backhaul interface in the second interface module is configured to be connected to a radio access network to receive to-be-sent data and backhaul received data.

8. The communication base station according to any one of claims 1 to 5, wherein the support module is further configured to adjust posture of the communication module.

9. The communication base station according to any one of claims 1 to 5, wherein the flight module comprises one of a rotor flight structure or a jet flight structure.

10. The communication base station according to claim 6, wherein the mechanical fixation interface in the first interface module is further configured to monitor whether the mechanical fixation interface is locked by the connection module, and in a case where the mechanical fixation interface is in a locked state, the communication module is incapable of starting the flight module to perform migration.

11. A communication base station migration method, applied to the communication base station according to any one of claims 1 to 10, comprising:
in a case where the communication module acquires a migration instruction, sending, by the communication module, a first disconnection request to the connection module in the first area,
wherein the first area is an area where the communication module is currently located, and the migration instruction comprises at least a target migration position and a target connection module identifier;
in a case where a disconnection condition is satisfied, sending, by the connection module, first disconnection acknowledgement information to the communication module;
migrating, by the flight module in the communication module, to the second area according to a flight route planned for the target migration position, wherein the second area is an area where the target migration position is located;
in a case where the communication module reaches the target migration position, acquiring alignment identifiers of a connection module corresponding to the target connection module identifier; and
adjusting, by the communication module, a flight posture of the communication module according to the alignment identifiers to enable the communication module to be docked with a second interface module of the connection module corresponding to the target connection module identifier.

12. The communication base station migration method according to claim 11, before sending, by the communication module, the first disconnection request to the connection module in the first area, further comprising:
performing, by the communication module, clear operation on access users and data, wherein the clear operation on the access users and the data comprises: completing sending of to-be-sent data and completing receiving and forwarding of to-be-received data, sending a cell handover instruction to access terminals, and broadcasting a service termination notification to a cell and stopping new access from terminals.

13. The communication base station migration method according to claim 11, further comprising:
breaking, by the connection module, a connection with a first interface module in the communication module and releasing mechanical support and locking; and
switching a power supply mode of the communication module from a power supply by the connection module connected to the communication module to a power supply by a power supply module inside the communication module.

14. The communication base station migration method according to claim 11, wherein the connection module comprises an antenna module, and the communication base station migration method further comprises:
sending, by the communication module, a second disconnection request to the connection module in the first area; and
sending, by the connection module, second disconnection acknowledgement information to the communication module through the antenna module.

15. The communication base station migration method according to claim 11, wherein the disconnection condition comprises that a number of access terminals is 0 and that to-be-received data and to-be-sent data are zero.

16. The communication base station migration method according to claim 11, further comprising:
in a flight process of the communication module, receiving, by an antenna module in the communication module, positioning information from another base station or a satellite; and
performing, by a positioning and navigation assembly in the flight module, positioning and navigation on the communication module in real time according to the positioning information until the communication module migrates to the target migration position.

17. The communication base station migration method according to claim 11, further comprising:
adjusting a position and a posture of the communication module and docking with a mechanical fixation interface of the connection module corresponding to the target connection module identifier by using the flight module in the communication module, and sending a first docking request to the connection module; and
after the connection module receives the first docking request, connecting the the connection module to a power supply interface and a communication interface, and sending first docking acknowledgement information to the communication module.

18. The communication base station migration method according to claim 17, wherein the connection module comprises an antenna module; and before docking with the mechanical fixation interface of the connection module corresponding to the target connection module identifier by using the flight module in the communication module, the communication base station migration method further comprises:
sending, by the communication module, a second docking request to the connection module corresponding to the target connection module identifier through a wireless channel; and
in a case where the communication module is aligned with the connection module corresponding to the target connection module identifier, sending, by the connection module corresponding to the target connection module identifier, second docking acknowledgement information to the communication module.

19. The communication base station migration method according to claim 11, wherein after the communication module establishes a connection with the connection module in the second area, the communication base station migration method further comprises:
switching a power supply mode of the communication module from a power supply by a power supply module inside the communication module to a power supply by the connection module connected to the communication module.

20. The communication base station migration method according to claim 11, wherein the migration instruction is acquired in one of the following manners: the migration instruction is acquired regularly from migration plan data stored in a storage module; or the migration instruction is delivered by a base station management system or a network management system.

21. A storage medium with a computer program stored therein, wherein, the computer program, when executed by a processor, causes the processor to perform the communication base station migration method according to any one of claims 11 to 20.
